# EUROPEAN PATENT APPLICATION

(11) **EP 4 832 579 A1**
(43) Date of publication of application: **28.10.2026**
(21) Application number: 23961935.6
(22) Date of filing: 22.12.2023
(51) Int. Cl.: H04W 36/08

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: LIN, Xue, Dongguan, Guangdong 523860 (CN); YOU, Xin, Dongguan, Guangdong 523860 (CN)
(74) Representative: RGTH
(86) International application number: PCT/CN2023/140878
(87) International publication number: WO 2025/129602

(57) **Abstract**

Provided are a wireless communication method, a terminal device, and a network device. The method comprises: a terminal device receives first configuration information sent by a network device, wherein the first configuration information is associated with first reporting of the terminal device, and the first configuration information is used for determining reporting content of the first reporting, and/or a condition for triggering the first reporting.

## Description

### TECHNICAL FIELD

The present disclosure relates to the field of communication technologies, and in particular, to wireless communication methods, terminal devices, and network devices.

### BACKGROUND

A terminal device can report a current cell measurement result to a network device to obtain a cell handover configuration provided by the network device. However, this approach presents certain issues. For example, if the location of the terminal device changes, then the terminal device may be unable to access a target cell based on the cell handover configuration. As another example, in scenarios of supporting carrier aggregation (CA) or dual connectivity (DC) deployment, the current cell measurement result reported by the terminal device may be insufficient to determine information related to a target secondary cell, or the reported content may contain unnecessary information, leading to large signaling overhead.

### SUMMARY

The present disclosure provides wireless communication methods, terminal devices, and network devices. The various aspects of the present disclosure are described below.

In a first aspect, a wireless communication method is provided, including: receiving, by a terminal device, first configuration information transmitted by a network device, the first configuration information being associated with a first report of the terminal device. The first configuration information is used for determining reported content of the first report and/or a condition for triggering the first report.

In a second aspect, a wireless communication method is provided, including: transmitting, by a network device, first configuration information to a terminal device, the first configuration information being associated with a first report of the terminal device. The first configuration information is used for determining reported content of the first report and/or a condition for triggering the first report.

In a third aspect, a terminal device is provided, including: a receiving unit configured to receive first configuration information transmitted by a network device, the first configuration information being associated with a first report of the terminal device. The first configuration information is used for determining reported content of the first report and/or a condition for triggering the first report.

In a fourth aspect, a network device is provided, including: a first transmitting unit, configured to transmit first configuration information to a terminal device, the first configuration information being associated with a first report of the terminal device. The first configuration information is used for determining reported content of the first report and/or a condition for triggering the first report.

In a fifth aspect, a terminal device is provided, including a processor, a memory, and a communication interface. The memory is configured to store one or more computer programs, and the processor is configured to call the computer programs in the memory to cause the terminal device to perform part or all of steps of the method of the first aspect.

In a sixth aspect, a network device is provided, including a processor, a memory, and a communication interface. The memory is configured to store one or more computer programs, and the processor is configured to call the computer programs in the memory to cause the network device to perform part or all of steps of the method of the second aspect.

In a seventh aspect, embodiments of the present disclosure provide a communication system, and the system includes the above terminal and/or the above network device. In another possible design, the system may also include other devices that interact with the terminal or the network device in the solutions provided in the embodiments of the present disclosure.

In an eighth aspect, embodiments of the present disclosure provide a computer-readable storage medium. The computer-readable storage medium has stored a computer program, and the computer program causes a terminal to perform part or all of steps of the method of the first aspect or the second aspect described above.

In a ninth aspect, embodiments of the present disclosure provide a computer program product. The computer program product includes a non-transitory computer-readable storage medium storing a computer program, and the computer program is operable to cause a terminal to perform part or all of steps of the method of the first aspect or the second aspect described above. In some implementations, the computer program product may be a software installation package.

In a tenth aspect, embodiments of the present disclosure provide a chip, the chip includes a memory and a processor, and the processor is capable of calling and running a computer program from the memory to implement part or all of steps of the method of the first aspect or the second aspect described above.

In the embodiments of the present disclosure, the terminal device is configured with information related to the first report (i.e., the first configuration information), so that the terminal device can determine the reported content of the first report and the condition for triggering the first report, which helps to solve some problems in reporting current cell measurement information. For example, the content of the first report includes prediction information of the cell measurement result, which is conducive to improving the accuracy of cell handover configuration information. As another example, the first configuration information may implicitly indicate an association relationship between cells/frequency points by configuring cell/frequency point lists, which is conducive to reducing the signaling overhead for determining a target secondary cell (group).

### BRIEF DESCRIPTION OF THE DRAWINGS

FIG. 1 is a schematic diagram of a networking architecture for EN-DC.
FIG. 2 is a schematic diagram of an EN-DC networking manner.
FIG. 3 is a schematic diagram of another EN-DC networking manner.
FIG. 4 is a schematic diagram of a control plane networking manner for EN-DC.
FIG. 5 is an example diagram of a dual connectivity networking manner with an LTE eNB as a master node.
FIG. 6A is an example diagram of a connection between an eLTE eNB and a 5GC.
FIG. 6B is an example diagram of a dual connectivity networking manner with the eNB in FIG. 6A as a master node.
FIG. 7A is an example diagram of a connection between an NR gNB and a 5GC.
FIG. 7B is an example diagram of a dual connectivity networking manner with the gNB in FIG. 7A as a master node.
FIG. 7C is another example diagram of a dual connectivity networking manner with the gNB in FIG. 7A as a master node.
FIG. 8 is a schematic diagram of an architecture of a communication system provided in embodiments of the present disclosure.
FIG. 9 is a schematic flowchart of a wireless communication method provided in embodiments of the present disclosure.
FIG. 10 is a schematic distribution diagram of surrounding cells of a terminal device.
FIG. 11 is an example diagram of a predicted trajectory of a terminal device.
FIG. 12 is a schematic diagram of a terminal device in embodiments of the present disclosure.
FIG. 13 is a schematic diagram of a network device in embodiments of the present disclosure.
FIG. 14 is a schematic structural diagram of a communication apparatus in embodiments of the present disclosure.

### DETAILED DESCRIPTION

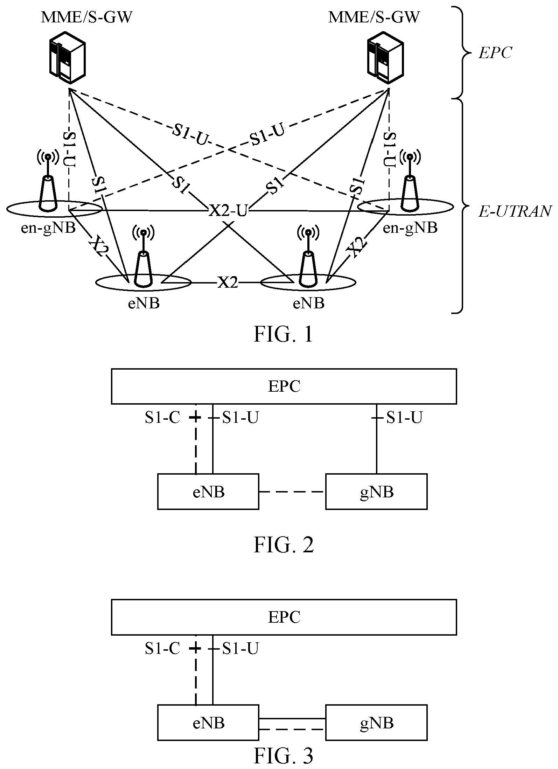

The technical solutions in the present disclosure will be described below with reference to the accompanying drawings. To facilitate the understanding of the present disclosure, the communication process involved in the embodiments of the present disclosure will be firstly introduced with reference to FIGS. 1 to 8.

### Dual connectivity communication scenarios

Currently, with the increasing demand for rate, latency, high-speed mobility, and energy efficiency, as well as the diversity and complexity of services in future life, the 3GPP international standards organization has begun developing the 5th generation (5G) communication system. The main application scenarios for 5G include: enhanced mobile broadband (eMBB), ultra reliability and low latency communication (URLLC), and massive machine-type communications (mMTC).

eMBB continues to target the delivery of multimedia content, services, and data to users, with its demand growing rapidly. In addition, since eMBB may be deployed in different scenarios, such as indoors, urban areas, and rural areas, its capabilities and requirements vary significantly. Therefore, it cannot be generalized and needs to be analyzed in detail in conjunction with specific deployment scenarios. Typical applications of URLLC include industrial automation, power automation, remote medical operations (surgery), and traffic safety assurance. Typical characteristics of mMTC include high connection density, small data volumes, delay-insensitive services, and low cost and long lifespan of modules.

During the early deployment of new radio (NR), achieving complete NR coverage is difficult. Therefore, a typical network coverage is wide-area long term evolution (LTE) coverage and NR island coverage mode. Furthermore, a substantial amount of LTE is deployed below 6 GHz, leaving limited spectrum below 6 GHz available for 5G. Consequently, NR needs to explore spectrum applications above 6 GHz, where high-frequency bands have limited coverage and experience rapid signal attenuation.

To expedite the deployment and commercial application of 5G networks, 3GPP first completed the initial 5G release, known as EN-DC (LTE-NR dual connectivity), by the end of December 2017. FIG. 1 is a schematic diagram of a networking architecture for EN-DC. Referring to FIG. 1, The EN-DC is a form of DC where an LTE base station (e.g., an eNB) acts as a master node (MN) or master base station, and an NR base station (e.g., a gNB) acts as a secondary node (SN) or secondary base station. Both the MN and the SN may establish data plane connections with the evolved packet core (EPC) network (i.e., the 4th generation (4G) communication system core network) to provide air interface transmission resources for data between the terminal device and the EPC. The EPC may include a mobility management entity (MME) and/or a serving gateway (S-GW).

It will be noted that in the architecture shown in FIG. 1, the S1 interface is a communication interface between the LTE base station and the EPC. The S1 interface may also be divided into S1-U interface and S1-C interface based on different types of information transmitted by the S1 interface. The S1-U interface can be used for transmitting user plane data, and the S1-C interface can be used for transmitting control plane signaling.

The connection between the terminal device and the network device in an EN-DC dual connectivity scenario will be described below by taking two networking manners shown in FIGS. 2 to 3 as examples.

Referring to FIG. 2, the LTE eNB acts as the MN and establishes an S1-U interface and an S1-C interface with the EPC. The gNB acts as the SN and establishes an S1-U interface with the EPC. In this architecture, control plane signaling between the EPC and the base stations may only be transmitted between the EPC and the LTE eNB, and the LTE eNB then forwards specific control plane signaling to the gNB. User plane data may be transmitted between the EPC and the LTE eNB, as well as between the EPC and the gNB.

Referring to FIG. 3, the LTE eNB acts as the MN and establishes an S1-U interface and an S1-C interface with the EPC. The gNB acts as the SN and does not communicate directly with the EPC. In this architecture, control plane signaling and user plane data between the EPC and the base stations may only be transmitted between the EPC and the LTE eNB. Subsequently, the LTE eNB transmits specific control plane signaling and/or user plane data to the gNB.

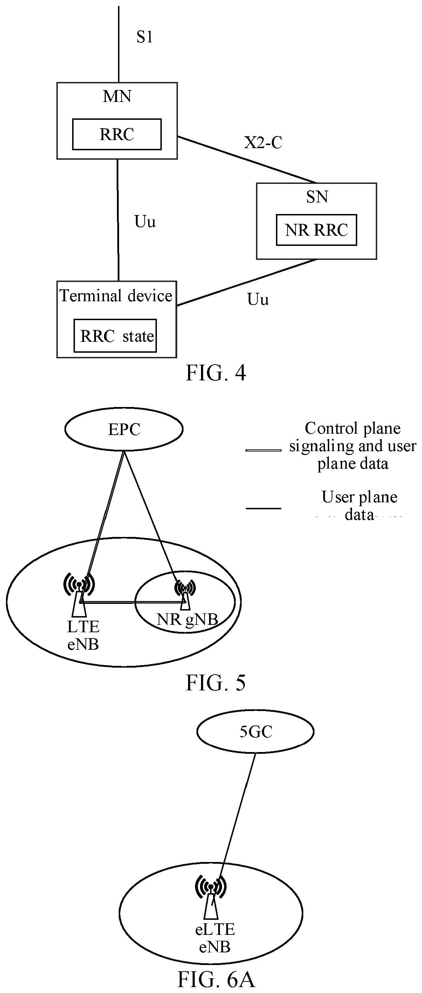

It will be noted that in the networking manners shown in FIGS. 2 and 3, the MN and the SN may each be configured with an RRC entity to generate RRC PDUs, referring to FIG. 4. However, at the same moment, the terminal device typically has only one RRC state machine, which is based on the MN side.

It will also be noted that in LTE, signaling bearers may include signaling radio bearer (SRB)0, SRB1, and SRB2. On this basis, the EN-DC may further support SRB3. The SRB3 is used for transmitting RRC signaling between the SN and the terminal device, and the establishment of this signaling bearer does not require resource negotiation and UE capability negotiation with the MN. In addition, to improve the reliability of SRB1 and SRB2 transmissions, EN-DC may also support split SRB1 and split SRB2. That is, packet data convergence protocol (PDCP) protocol data units (PDUs) corresponding to RRC messages generated by the MN are duplicated and transmitted on the SN side.

The method provided in the embodiments of the present disclosure can be applied to various multiple RAT dual connectivity (MR-DC) architectures, such as dual connectivity between a 4G communication system and a 5G communication system, dual connectivity between a 5G communication system and a 4G communication system, or dual connectivity between a 5G communication system and a 5G communication system.

The dual connectivity between a 4G communication system and a 5G communication system may include: dual connectivity between an evolved universal terrestrial radio access (E-UTRA) system and a new radio (NR) system (E-UTRA-NR dual connectivity (EN-DC)), and dual connectivity between an E-UTRA system and a NR system under a 5G core network (NG-RAN E-UTRA-NR dual connectivity (NGEN-DC)). The EN-DC may also be referred to as the option 3 series.

The NGEN-DC may also be referred to as the option 7 series. The NGEN-DC is a form of DC where an LTE base station (e.g., ng-eNB) acts as the MN, an NR base station (e.g., gNB) acts as the SN. Unlike the EN-DC, in the NGEN-DC, and both the MN and the SN can be connected to the 5G core network (5GC) to provide air interface transmission resources for data between the terminal devices and the 5GC.

The dual connectivity between a 5G communication system and a 4G communication system may include dual connectivity between an NR system and an E-UTRA system (NR-E-UTRA dual connectivity (NE-DC)), and the like. The NE-DC may also be referred to as the option 4 series. The NE-DC is a form of DC where an NR base station (e.g., gNB) acts as the MN, an LTE base station (e.g., ng-eNB) acts as the SN, and both the MN and the SN can have data plane connections to the 5GC to provide air interface transmission resources for data between the terminal devices and the 5GC.

The dual connectivity between a 5G communication system and a 5G communication system may include DC between an NR system and an NR system. In the DC between an NR system and an NR system, both the MN and the SN are NR base stations.

The above description introduces various dual connectivity networking manners. Next, with reference to FIGS. 5 to 7, dual connectivity networking manners based on different types of master nodes will be introduced below.

FIG. 5 is an example diagram of a dual connectivity (i.e., EN-DC) networking manner with an LTE eNB as a master node. Referring to FIG. 5, the LTE eNB is the MN, and the NR gNB is the SN. In this architecture, control plane signaling between the EPC and the base stations may only be transmitted between the EPC and the LTE eNB, and the LTE eNB then forwards specific control plane signaling to the gNB. User plane data may be transmitted between the EPC and the LTE eNB, as well as between the EPC and the gNB.

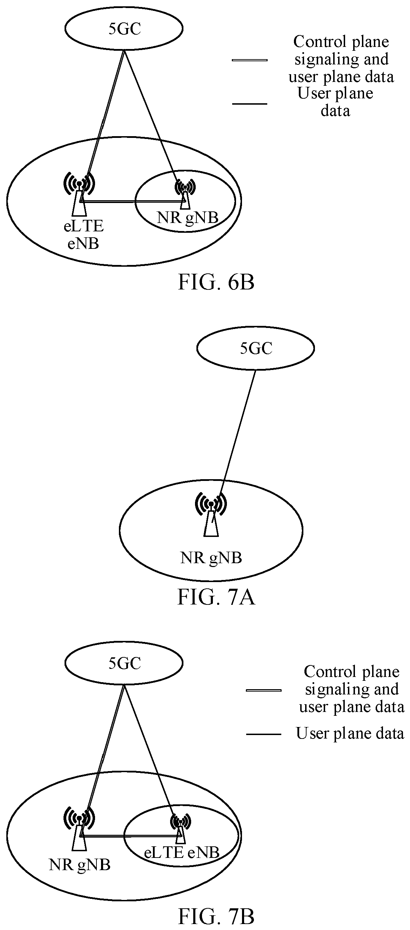

FIG. 6A is an example diagram of a connection between an eLTE eNB and a 5GC. FIG. 6B is an example diagram of a dual connectivity (i.e., NGEN-DC) networking manner with the eNB in FIG. 6A as a master node. Referring to FIG. 6B, the NR gNB can be connected to the 5GC, and the eLTE eNB may constitute an NGEN-DC architecture with the NR gNB, where the eLTE eNB connected to the 5GC may act as the MN and the NR gNB acts as the SN. In this architecture, both the MN and the SN can be connected to the 5GC, and user plane data of the MN and the SN can be aggregated through the 5GC; and control plane signaling can only be transmitted between the 5GC and the eNB, and then forwarded by the eNB to the gNB.

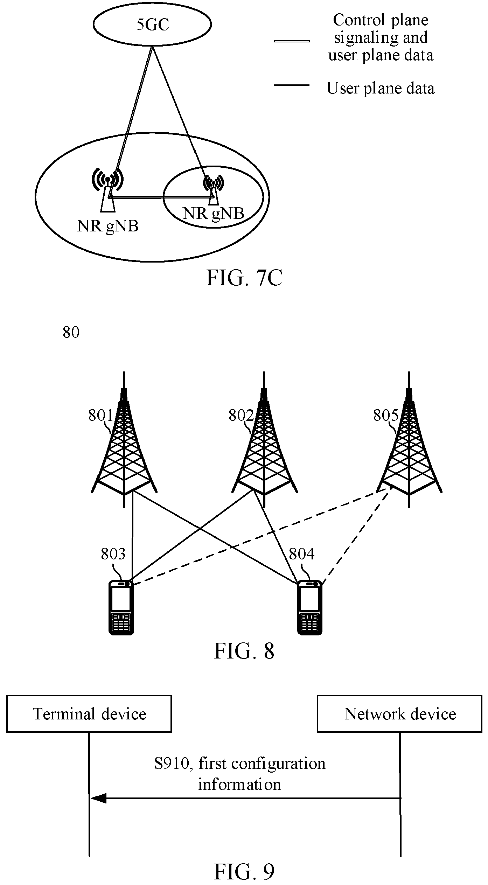

FIG. 7A is an example diagram of a connection between an NR gNB and a 5GC. FIG. 7B is an example diagram of a dual connectivity (i.e., NE-DC) networking manner with the gNB in FIG. 7A as a master node. Referring to FIG. 7B, the eLTE eNB can be connected to the 5GC and act as the SN. In this architecture, both the MN and the SN can be connected to the 5GC, and user plane data of the MN and the SN can be aggregated through the 5GC; and control plane signaling can only be transmitted between the 5GC and the gNB, and then forwarded by the gNB to the eNB. FIG. 7C is another example diagram of a dual connectivity (i.e., NR-DC) networking manner with the gNB in FIG. 7A as a master node. Referring to FIG. 7C, another NR gNB can be connected to the 5GC and act as the SN. In this architecture, both the MN and the SN can be connected to the 5GC, and user plane data of the MN and the SN can be aggregated through the 5GC; and control plane signaling can only be forwarded by the MN to the SN.

The communication system applicable to the embodiments of the present disclosure will be described below by taking the communication system 80 shown in FIG. 8 as an example.

FIG. 8 is a schematic diagram of an architecture of a communication system provided in embodiments of the present disclosure. Referring to FIG. 8, the communication system 80 may include a network device 801, a network device 802, a network device 805, a terminal device 803, and a terminal device 804. FIG. 8 is for illustrative purposes only and does not limit the applicable scenarios of the technical solutions provided in the present disclosure.

The network device in FIG. 8, i.e., the network device 801, the network device 802, or the network device 805, may be any type of device with wireless transceiver capability, and it includes, but is not limited to, an evolutional NodeB (NodeB or eNB or e-NodeB) in an LTE, a base station (gNodeB or gNB) or a transmission receiving point/transmission reception point (TRP) in an NR, or subsequent evolution of 3GPP. The base station may be a macro base station, a micro base station, a pico base station, a small station, a relay station, or a balloon station. Multiple base stations may support a network of the same technology mentioned above or networks of different technologies mentioned above. The base station may include one or more co-sited or non-co-sited TRPs. The network device may also be a radio controller, a centralized unit (CU), and/or a distributed unit (DU) in a cloud radio access network (CRAN) scenario.

The terminal in FIG. 8, i.e., the terminal device 803 or the terminal device 804, is a device with wireless transceiver capability; it may be deployed on land, including indoors or outdoors, handheld, wearable or vehicle-mounted; it may also be deployed on the water surface (such as ships, etc.); it may also be deployed in the air (such as airplanes, balloons and satellites). The terminal may be a mobile phone, a tablet computer (pad), a computer with a wireless transceiver function, a virtual reality (VR) terminal device, an augmented reality (AR) terminal device, a terminal in industrial control, a vehicle-mounted terminal device, a terminal in self-driving, a terminal in assisted driving, a terminal in remote medical, a terminal in a smart grid, a terminal in transportation safety, a terminal in a smart city, or a terminal in a smart home. The embodiments of the present disclosure do not limit the application scenarios. The terminal may sometimes also be referred to as a terminal device, a user equipment (UE), an access terminal, a vehicle-mounted terminal, an industrial control terminal, a UE unit, a UE station, a mobile station, a mobile console, a remote station, a remote terminal, a mobile device, a UE terminal device, a wireless communication device, a machine terminal, a UE agent, or a UE apparatus. The terminal may be stationary or mobile.

As an example and not a limitation, in the embodiments of the present disclosure, the terminal may be a wearable device. Wearable devices, also known as wearable smart devices, are a general term for wearable devices that use wearable technology to intelligently design and develop wearable devices for daily wear, such as glasses, gloves, watches, clothing, and shoes. A wearable device is a portable device that is worn directly on the body or integrated into the user's clothing or accessories. Wearable devices are not just hardware devices, but also realize powerful functions through software support, data interaction, and cloud interaction. In a broad sense, wearable smart devices include those that are fully functional, large in size, and can achieve complete or partial functions without relying on smartphones, such as smart watches or smart glasses, as well as those that only focus on a certain type of application function and need to be used in conjunction with other devices such as smartphones, such as various smart bracelets and smart jewelry for vital sign monitoring.

In addition, the NR may also be deployed independently. In the 5G communication system, the maximum channel bandwidth may be 400 MHz (wideband carrier), which is significantly larger than the maximum 20M bandwidth in LTE. In an NR stand-alone (SA) system, the rate may be increased through CA, that is, by trading bandwidth for rate. Currently, carrier aggregation is typically performed between carriers of the same radio access technology (RAT) at a co-located site. Each carrier participating in carrier aggregation is called a component carrier. Among the component carriers, a component carrier that carries signaling transmissions and manages other component carriers is called a primary carrier, also called a primary cell (PCell). A secondary carrier is also called a secondary cells (SCell). The SCell may be used for expanding bandwidth and increasing rate, and the PCell determines when to add or release an SCell.

### Cell Handover

Cell handover (HO) aims to improve the continuity of services provided to a terminal device by a communication system. In the wireless communication system, when the terminal device moves from a cell (also called "source cell") to another cell, it needs to switch to the another cell (also called "target cell") to maintain communication. The cell may be a primary cell (PCell) or a primary secondary cell (PSCell). Generally, cell handover may be classified into two types: traditional handover mechanism and conditional handover mechanism.

In the traditional handover mechanism, to improve the continuity of services provided by the communication system to the terminal device in a connected state, a network device sends a handover command to the terminal device at an appropriate time (e.g., when a signal measurement result of the terminal device in a serving cell is below a threshold) to indicate the terminal device performing a cell handover. In some implementations, the handover command may be an RRC reconfiguration message containing synchronous reconfiguration information.

In the conditional handover (CHO) mechanism, the network device may configure a terminal device with configurations of one or more target cells and conditional handover events associated with one or more conditional handover target cells. Correspondingly, the terminal device may perform a handover condition evaluation task to evaluate whether the conditional handover events associated with the one or more conditional handover target cells are met. In a case where one or more conditional handover events associated with the one or more conditional handover target cells are met, the terminal device may switch from the source cell (or called "current serving cell") to a corresponding conditional handover target cell that meets the conditional handover event(s).

The CHO introduced in the R16 standard version does not support the inclusion of a secondary cell group (SCG) configuration in a candidate cell configuration. To support CHO in MR-DC scenarios, RAN3 further enhanced the signaling design between Xn interfaces during the R17 discussion phase to support the inclusion of the SCG configuration in the CHO candidate cell configuration. A potential issue with this configuration method is that when the terminal device determines the target PCell based on execution condition(s), the PSCell associated with the PCell may have inadequate link quality, or it may not be an appropriate PSCell, leading to the terminal device failing to access the PSCell. To further ameliorate the impact of mobility on throughput in DC scenarios, R18 mobility enhancement introduces a PSCell evaluation process on the basis of CHO with SCG in the R17, which is referred to as CHO with candidate SCGs. The relevant definition in the protocol is as follows.

A CHO with candidate SCG(s) is defined as a PCell change with PSCell addition/change that is executed by the UE when the execution conditions for both the PCell and the associated PSCell are met. The UE starts evaluating the execution conditions for candidate PCell(s) and candidate PSCell(s) simultaneously upon receiving the CHO with candidate SCG(s) configuration, and stops evaluating the execution conditions once a PCell change or PSCell change is triggered. The UE does not execute CHO with candidate SCG(s) until the execution conditions for both the PCell and the associated PSCell are met.

In the related art, the network device may provide the cell handover configuration for the terminal device based on the measurement result reported by the terminal device, such as performing an SCell addition/change/release or SCG addition/change/release process in scenarios of supporting CA/DC deployment. However, this approach presents certain issues.

For example, if the location of the terminal device changes, then the terminal device may be unable to access the target cell based on the cell handover configuration. This is because the reported measurement result typically only reflects the current channel quality of the target frequency point/cell, and as the location of the terminal device changes, the wireless link conditions of the target frequency point/cell relative to the terminal device will also change accordingly. As an example, based on the current measurement result (e.g., the result reported to the network device at moment 1), cell 1 on frequency point 1 has the optimal measurement result (e.g., meeting access requirements). However, in fact, the terminal device will quickly move out of the coverage of cell 1 and into the coverage of cell 2 on frequency point 2. If the network device provides the cell handover configuration for the terminal device based on the measurement result received at moment t1, it is highly likely to result in a handover failure for the terminal device, causing service interruption.

As another example, in scenarios of supporting CA/DC deployment, the current cell measurement result reported by the terminal device may be insufficient to determine information related to a target secondary cell, or the reported content may contain unnecessary information, leading to large signaling overhead. This is because the terminal device is unaware of which base stations/cells can form a CA/DC relationship. Therefore, the measurement result reported by the terminal device may be inadequate to help the network device determine the target SCell/SCG configuration and its activation/deactivation status, or the reported content may contain unnecessary information, causing substantial signaling overhead.

FIG. 9 is a schematic flowchart of a wireless communication method provided in embodiments of the present disclosure, to address the above issues. The method shown in FIG. 9 involves interaction between a network device and a terminal device. The method provided in the embodiments of the present disclosure will be described below from the perspective of the interaction between the terminal device and the network device.

The method shown in FIG. 9 may include step S910. In step S910, the terminal device receives first configuration information transmitted by the network device. In other words, the network device transmits the first configuration information to the terminal device.

The first configuration information is associated with a first report of the terminal device. For example, the first configuration information may be used for determining a reported content of the first report and/or a condition for triggering the first report.

In some embodiments, the first report may be associated with cell handover of the terminal device. In other words, the first report is used for determining information related to the cell handover of the terminal device, such as a cell handover configuration.

In some embodiments, the reported content of the first report may include first prediction information, and the first prediction information may be associated with a predicted value of a cell measurement result. The predicted value of the cell measurement result may be obtained based on technologies such as artificial intelligence (AI). For example, AI technology may be used for predicting trajectory information of the terminal device and a channel quality of a target frequency point/cell. The terminal device may report information of cell(s)/frequency point(s) that meet access requirements of the terminal device for a future time period based on a predicted trajectory of the terminal device for the future period. In the above-mentioned example, the measurement result at moment t1 shows that cell 1 on frequency point 1 has the optimal measurement result, but the terminal device quickly moves out of the coverage of cell 1 and into the coverage of cell 2 on frequency point 2. By using the method provided in the embodiments of the present disclosure, the terminal device can report cell 2 on frequency point 2 to the network device, and do not report cell 1 on frequency point 1, thereby avoiding service interruption caused by the terminal device attempting to access cell 1.

In some embodiments, the first configuration information may include a frequency point/cell configuration, and the frequency point/cell configuration, for example, may include frequency point(s)/cell(s) of interest to the network device. The frequency point/cell configuration may be determined based on information known to the network device, such as a positional relationship of the terminal device or frequency point(s)/cell(s).

In some embodiments, the content of the first report may be associated with the frequency point(s)/cell(s) in the first configuration information, or may not be associated with the frequency point(s)/cell(s) in the first configuration information. For example, the terminal device may only measure, predict, and report information related to the frequency point(s)/cell(s) in the first configuration information, or the terminal device may measure, predict, and report frequency point(s)/cell(s) other than the frequency point(s)/cell(s) in the first configuration information.

In some embodiments, the frequency point/cell configuration may include one or more of the following: a first frequency point/cell (e.g., a first frequency point/cell list); or a second frequency point/cell (e.g., a second frequency point/cell list), where the second frequency point/cell is associated with at least a part of the first frequency point/cell. A first frequency point/cell configuration includes at least one piece of cell/frequency point information, and the second frequency point/cell includes at least a cell/frequency point configuration associated with all/part of cells/frequency points in the first cell/frequency point configuration. The association between the second frequency point/cell and the first frequency point/cell may, for example, indicate that the second frequency point/cell and the first frequency point/cell are capable of forming a CA/DC relationship. Furthermore, the frequency point/cell configuration may also include an association relationship between frequency points/cells; for example, cell 1 is associated with cell 3.

In scenarios of supporting CA/DC deployment, the terminal device can obtain cells that are capable of forming the CA/DC relationship based on the frequency point/cell configuration, and in turn determine the relevant reported content. That is, the content of the first report may include information of first cell(s) and information of second cell(s) associated with the first cell(s), which helps the network device provide the terminal device with appropriate primary cell configuration information and secondary cell configuration information. In addition, in a case where the network device expects the terminal device to perform a primary cell group handover or a secondary cell group handover, if the terminal device is unaware of which base stations/cells can form a CA/DC relationship, then the terminal device may need to report information of a large number of cells to obtain appropriate primary/secondary cell configuration information. Based on the frequency point/cell configuration, the terminal device may selectively determine the reported content, which is conducive to saving signaling overhead.

In some embodiments, the first configuration information may include the condition for triggering the first report. Based on the condition for triggering the first report, it is helpful for the terminal device to filter the reported content, and in turn avoids the signaling overhead caused by reporting all information (e.g., all prediction information). The condition for triggering the first report will be described below by taking an example in which the content of the first report is the first prediction information.

In some embodiments, the condition for triggering the first report may be associated with a channel quality of a cell, such as one or more of the following: reference signal received power (RSRP), reference signal received quality (RSRQ), or signal to interference plus noise ratio (SINR). Considering an example in which the condition for triggering the first report is associated with an RSRP threshold, the condition for triggering the first report may include that the first prediction information meets a preset condition. The preset condition may include one or more of the following: a predicted value of a RSRP measurement result of a first frequency point/cell being greater than or equal to a first RSRP threshold; a predicted value of a RSRP measurement result of a second frequency point/cell being greater than or equal to a second RSRP threshold; or a first time period and a second time period overlapping. Here, the second frequency point/cell is associated with the first frequency point/cell, the first time period is time in which the predicted value of the RSRP measurement result of the first frequency point/cell is greater than or equal to the first RSRP threshold, and the second time period is time in which the predicted value of the RSRP measurement result of the second frequency point/cell is greater than or equal to the second RSRP threshold.

Reporting the first prediction information associated with the frequency point/cell whose RSRP is greater than the threshold helps to increase the success rate of the terminal device accessing the target cell. In addition, in scenarios of supporting CA/DC deployment, if the first time period and the second time period overlap, reporting the first prediction information associated with the first frequency point/cell and the second frequency point/cell facilitates simultaneous access to the primary cell and the primary secondary cell by the terminal device.

In some embodiments, the condition for triggering the first report may be associated with time information. The time information may include a prediction time period and/or a time threshold for obtaining the first prediction information, where the time threshold is associated with time in which the first prediction information meets the preset condition.

For example, the condition for triggering the first report may include that the first prediction information meets the preset condition within a prediction time period (e.g., within a future A time). Since there may be a time interval between a moment of the first report and a moment at which the terminal device performs a cell handover, reporting information related to cell(s) that meet the preset condition within the prediction time period helps to increase the success rate of the terminal device accessing the target cell. The prediction time period may include, for example, the moment at which the terminal device performs the cell handover.

As another example, the condition for triggering the first report may include that a duration in which the first prediction information meets the preset condition is greater than or equal to the time threshold (which may include a first time threshold and/or a second time threshold). As an example, the condition for triggering the first report may include that a duration in which the predicted value of the RSRP measurement result of the first frequency point/cell is greater than or equal to the first RSRP threshold is greater than or equal to the first time threshold, and/or a duration in which the predicted value of the RSRP measurement result of the second frequency point/cell is greater than or equal to the second RSRP threshold is greater than or equal to the second time threshold. The condition for triggering the first report may further increase the success rate of the terminal device accessing the target cell, and may also prevent frequent handovers of the serving cell of the terminal device. As another example, the condition for triggering the first report may include that a duration in which the first time period and the second time period overlap is greater than or equal to a third time threshold, which helps to increase the success rate of the terminal device simultaneously accessing the primary cell and the primary secondary cell.

For yet another example, the condition for triggering the first report includes that the first prediction information meets the preset condition within the prediction time period, and the duration in which the first prediction information meets the preset condition is greater than or equal to the time threshold. As an example, the condition for triggering the first report includes that within the future A time, the predicted value of the RSRP measurement result of the first frequency point/cell is greater than or equal to the first RSRP threshold, and the duration in which the predicted value of the RSRP measurement result of the first frequency point/cell is greater than or equal to the first RSRP threshold is greater than or equal to the first time threshold. As another example, the condition for triggering the first report includes that within a future B time, the predicted value of the RSRP measurement result of the second frequency point/cell is greater than or equal to the second RSRP threshold, and the duration in which the predicted value of the RSRP measurement result of the second frequency point/cell is greater than or equal to the second RSRP threshold is greater than or equal to the second time threshold.

In some embodiments, a value of B may be greater than a value of A. In some cases, a certain secondary cell or primary secondary cell may not be able to complete access simultaneously with the primary cell, but the secondary cell or primary secondary cell may complete access in a short time after the terminal device has completed the primary cell handover. Thus, the value of B is greater than the value of A, which is conducive to increasing the success rate of the terminal device accessing the secondary cell or primary secondary cell in the above scenarios. In addition, in this case, the network device may provide configuration information of the secondary cell or primary secondary cell to the terminal device, but deactivate the secondary cell or primary secondary cell.

In some embodiments, the condition for triggering the first report may be associated with priority level information of frequency points/cells. The priority level information of frequency points/cells may include one or more of the following: a priority level of the first frequency point/cell; a priority level of the second frequency point/cell; a third frequency point/cell; or a priority level threshold. Here, the second frequency point/cell is associated with the first frequency point/cell; the third frequency point/cell belongs to the first frequency point/cell or the second frequency point/cell, and a priority level of the third frequency point/cell is higher than priority levels of other frequency points/cells in the first frequency point/cell or the second frequency point/cell. That is, the third frequency point/cell is a higher-priority frequency point/cell.

In some embodiments, the priority level information of the frequency point/cell may be determined based on factors such as a load condition. For example, when the load is heavy or the amount of data to be transmitted is large, a frequency point/cell with a larger bandwidth or an idle frequency point/cell may have a higher priority level. In addition, the priority level of the frequency point/cell may be a pre-configured or predefined fixed priority level, or the priority level of the frequency point/cell may be dynamically adjusted, for example, based on changes in load.

In a case where the priority level information of the frequency point/cell includes the priority level of the frequency point/cell and the priority level threshold, the condition for triggering the first report may include that a priority level of the frequency point/cell associated with the first prediction information is greater than or equal to the priority level threshold. The priority level threshold may, for example, be included in the first configuration information or be pre-configured through other messages. Alternatively, the priority level threshold may be predefined in the protocol.

In a case where the priority level information of the frequency point/cell includes the third frequency point/cell, the condition for triggering the first report may include that the frequency point/cell associated with the first prediction information belongs to the third frequency point/cell. The third frequency point/cell may, for example, be included in the first configuration information.

In some embodiments, configuration granularity of the priority level information may be set for each frequency point, or may be set for each cell.

In some embodiments, the condition for triggering the first report may be associated with a probability threshold. The probability threshold mentioned here may be associated with a probability of the first prediction information meeting the preset condition. For example, the condition for triggering the first report may include that the probability of the first prediction information meeting the preset condition is greater than or equal to the probability threshold. For another example, the condition for triggering the first report may include that the probability of the first prediction information meeting the preset condition within the prediction time period is greater than or equal to the probability threshold. For yet another example, the condition for triggering the first report may include that a probability that the duration in which the first prediction information meets the preset condition within the prediction time period being greater than or equal to the time threshold is greater than or equal to the probability threshold. The preset condition mentioned here may be any one or more of the above-mentioned preset conditions, or it may be other types of preset conditions.

In some embodiments, the condition for triggering the first report may include presence of at least one secondary cell in an active state. In other words, a condition for triggering report of information related to the second frequency point/cell includes the presence of at least one secondary cell in an active state. In a case where at least one secondary cell in an active state is present, the system may operate in a DC mode. In this case, information related to a second frequency point/cell that is capable of forming a DC relationship with a first frequency point/cell, e.g., a predicted value of a measurement result, is reported to the network device, which may assist the network device in providing corresponding configuration information to the terminal device. In a case where no secondary cell is in an active state, the terminal device may not report information related to the second frequency point/cell to the network device, which is conducive to saving signaling overhead.

For the primary cell (e.g., the first cell) and the primary secondary cell/secondary cell (e.g., the second cell), the conditions for triggering the first report may be the same or different. For example, the preset condition associated with the first cell and the preset condition associated with the second cell may be different; for example, the first RSRP threshold and the second RSRP threshold may be different. For another example, time information associated with the first cell and time information associated with the second cell may be different. As an example, the prediction time period associated with the first cell and the prediction time period associated with the second cell may be different, such as A time and B time mentioned above. As an example, the time threshold associated with the first cell and the time threshold associated with the second cell may be different, such as the first time threshold and the second time threshold mentioned above. In addition, the priority level threshold associated with the first cell and the priority level threshold associated with the second cell may be different. For yet another example, the probability threshold associated with the first cell and the probability threshold associated with the second cell may be different.

It will be noted that for the first cell and the second cell, the conditions for triggering the first report may be partially the same and partially different. For example, the preset condition associated with the first cell and the preset condition associated with the second cell may be different, but the probability threshold associated with the first cell and the probability threshold associated with the second cell may be the same.

It will be noted that the condition(s) for triggering the first report may include one or more of the conditions mentioned above, i.e., includes one or more of the following: the first prediction information meeting the preset condition; the first prediction information meeting the preset condition within the prediction time period; the duration in which the first prediction information meets the preset condition being greater than or equal to the time threshold; the probability of the first prediction information meeting the preset condition being greater than or equal to the probability threshold; the priority level of the frequency point/cell associated with the first prediction information being greater than or equal to the priority level threshold; or the frequency point/cell associated with the first prediction information belonging to the third frequency point/cell.

In some embodiments, the terminal device may transmit the first prediction information to the network device. In other words, the network device may receive the first prediction information transmitted by the terminal device. The first prediction information may be determined based on the above first configuration information. For example, the terminal device may predict a measurement result of at least one cell on at least one frequency point (e.g., obtain a predicted value of the measurement result based on an AI model) and determine the first prediction information to be reported to the network device based on the predicted value and the first configuration information (e.g., the condition(s) for triggering the first report indicated in the first configuration information).

In some embodiments, the first prediction information may include one or more of the following: a predicted value of a measurement result of the serving cell of the terminal device; a predicted value of a measurement result of target frequency point(s)/cell(s); or probability information.

The predicted value of the measurement result of the serving cell of the terminal device may include, for example, a predicted value of a measurement result within the prediction time period (e.g., the future A time).

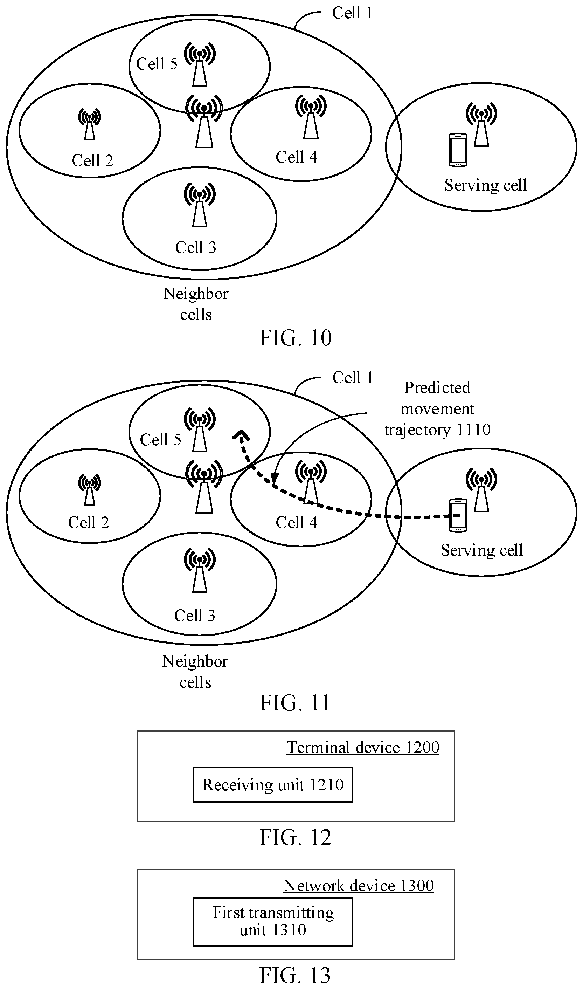

The target frequency point(s)/cell(s) may, for example, include one or more frequency points/cells in the first frequency point/cell, or may include one or more frequency points/cells in the first frequency point/cell and one or more frequency points/cells in the second frequency point/cell. Referring to FIG. 10, neighbor cells of the terminal device may include cell 1, cell 2, cell 3, cell 4, and cell 5, where cell 2, cell 3, cell 4, and cell 5 are associated with cell 1. The target frequency point(s)/cell(s) may include cell 1, or may include cell 1, cell 2, cell 3, cell 4, and cell 5. The predicted value of the measurement result of the target frequency point(s)/cell(s) may include, for example, a predicted value of a measurement result of cell 1 within the future A time, and/or predicted values of measurement results of cell 2 to cell 5 within the future B time.

In some embodiments, the probability information in the first prediction information may include a probability of the target frequency point(s)/cell(s) meeting a preset condition. The preset condition mentioned here may be a condition indicated by the first configuration information, such as any one or more of the preset conditions described above, or it may be other preset conditions. Reporting probability information of the target frequency point(s)/cell(s) meeting the preset condition may assist the network device in providing cell handover configuration for the terminal device, which is conducive to improving the accuracy of the configuration information.

In some embodiments, the terminal device may predict measurement results of the serving cell and/or neighbor cells of the terminal device based on prediction information of a movement trajectory of the terminal device (or a predicted movement trajectory of the terminal device). FIG. 11 shows a predicted movement trajectory 1110 of a terminal device. Based on the predicted movement trajectory 1110, the terminal device may predict the measurement results of the serving cell and the neighbor cells (cell 1 to cell 5).

In some embodiments, the first prediction information may assist the network device in releasing/adding secondary cell(s), as well as activating/deactivating the secondary cell(s). For example, the first prediction information includes information related to cells (e.g., the first cell and the second cell) capable of forming a CA/DC relationship, this information may assist the network device in adding/releasing the secondary cell(s). As an example, the first prediction information may include time information for which the first cell and the second cell are capable of forming the CA/DC relationship, the network device may determine, based on the time information, time for adding/releasing the secondary cell(s) and/or time for activating/deactivating the secondary cell(s). In a case where the first cell and the second cell cannot complete access simultaneously (e.g., the second cell meets an access condition after a period of time), the terminal device may complete access to the second cell after completing the handover of the first cell. In this case, the network device may add the second cell in advance but deactivate the second cell. In addition, the network device may activate the second cell when the second cell meets the access condition or before the second cell meets the access condition.

In some embodiments, the terminal device may receive second configuration information transmitted by the network device, and the second configuration information includes configuration information of candidate cells of the terminal device. For example, the second configuration information may be determined based on the first prediction information mentioned above.

The configuration information of the candidate cells may include, for example, configuration information of a candidate master cell group (MCG), and/or configuration information of a candidate secondary cell group (SCG), where the candidate SCG is associated with at least a part of the candidate MCG.

In some embodiments, the second configuration information further includes one or more of the following: first indication information used for indicating the terminal device to delay accessing an SCG among the candidate cells; second indication information used for indicating time information for the terminal device to activate and/or access the SCG among the candidate cells; or third configuration information used for indicating candidate cells that retain configuration information, and/or indicating time information for activating and/or accessing the candidate cells that retain the configuration information.

The first indication information may, for example, be used for indicating the terminal device to delay initiating random access to the SCG among the candidate cells. In some cases, for example, in the case where the secondary cell meets the access condition after a period of time, the terminal device may not be able to access the primary cell and the secondary cell simultaneously. In this case, the second configuration information includes the first indication information, which helps to avoid access failures caused by early access to the secondary cell.

In some embodiments, the second indication information may include a first timer and/or a third threshold, where the third threshold may be associated with a predicted value of a signal quality measurement result of the SCG. For example, in a case where a signal quality measurement result of a target SCG and/or a predicted value of the signal quality measurement result of the target SCG is greater than or equal to the third threshold, the target SCG is activated and/or random access is initiated to the target SCG. After the terminal device applies configuration of the target SCG, in a case where the terminal device determines the target SCG to be in a deactivated state and/or does not initiate random access to the target SCG, the terminal device activates the target SCG and/or initiates random access to the target SCG when the measurement result of the target SCG and/or the predicted value of the measurement result of the target SCG is greater than the third threshold. The third threshold mentioned here may be, for example, a third RSRP threshold. For another example, the second indication information may include duration configuration of the first timer. As an example, in response to timeout of the first timer, the target SCG is activated and/or random access is initiated to the target SCG. After the terminal device performs a conditional handover, in a case where the terminal device determines the target SCG to be in a deactivated state and/or does not initiate random access to the target, the terminal device starts the first timer, and activates the target SCG and/or initiates random access to the target SCG after the timeout of the first timer.

In some embodiments, after completing the conditional handover, the terminal device may retain configuration information of some candidate cells, thereby assisting the terminal device in performing a next cell handover, which helps to avoid signaling overhead.

The third configuration information may, for example, be used for indicating candidate cells that retain configuration information. In other words, the third configuration information is used for indicating configuration information of which candidate cells to retain. As an example, the third configuration information may indicate retained configuration information of candidate cells by an index of candidate cell configuration. Considering an example in which the second configuration information contains four candidate cell configurations (with corresponding indices 1 to 4), the third configuration information may indicate the retained configuration information of candidate cells (e.g., candidate cell configuration corresponding to an index value 4) after the terminal device completes the conditional handover. Correspondingly, the terminal device may release configuration information of cells other than the candidate cells whose configuration information is retained.

As another example, the third configuration information may include a second timer, e.g., duration configuration of the second timer. The retained configuration information of candidate cells may be used for the next cell handover. The second timer may be used for indicating time information for activating and/or accessing the candidate cells whose configuration information is retained. For example, in response to timeout of the second timer, the terminal device may perform one or more of the following: applying the retained configuration information of candidate cells, activating the candidate cells whose configuration information is retained, or accessing the candidate cells whose configuration information is retained.

The method for the terminal device to determine information related to a target candidate SCG based on the second configuration information configured by the network device is described above. Next, a method for the terminal device to determine the information related to the target candidate SCG based on the first prediction information will be described below. The information related to the target candidate SCG mentioned here may include, for example, time information for activating/deactivating the target candidate SCG and/or time information for accessing the target candidate SCG.

In some embodiments, the terminal device determines, based on the first prediction information, whether to simultaneously access the candidate MCG and the candidate SCG (where the candidate SCG is associated with at least a part of the candidate MCG). For example, the terminal device may determine, based on the first prediction information, whether the terminal device is simultaneously within the coverage of the candidate MCG and the coverage of candidate SCG at moment 3. For another example, the terminal device may determine, based on the first prediction information, whether each of the candidate MCG and the candidate SCG meets the access condition at moment 3, or a time period in which the candidate MCG meets the access condition and a time period in which the candidate SCG meets the access condition. As an example, if the terminal device is simultaneously within the coverage of the candidate MCG and the coverage of candidate SCG at moment 3 and each of the candidate MCG and the candidate SCG meets the access condition at moment 3, then the terminal device may simultaneously access the candidate MCG and the candidate SCG at moment 3; else, the terminal device cannot simultaneously access the candidate MCG and the candidate SCG at moment 3.

In some embodiments, in the case where the terminal device cannot simultaneously access the candidate MCG and the candidate SCG, the terminal device performs a first operation. The first operation includes one or more of the following: applying configurations of the candidate MCG and the candidate SCG; deactivating the candidate SCG; delaying initiating random access to the candidate SCG; or transmitting third indication information to a network device corresponding to a fourth cell, where the fourth cell is a cell accessed by the terminal device in the candidate MCG, and the third indication information is used for indicating information related to the candidate SCG.

For example, the terminal device cannot simultaneously access the candidate MCG and the candidate SCG, but the candidate SCG may meet access requirements (such as the terminal device moving into the coverage of the candidate SCG or the measurement result/predicted value of the measurement result of the candidate SCG meeting the execution condition(s) of the conditional handover) after a period of time. In this case, the terminal device may perform the first operation. Applying the configurations of the candidate MCG and the candidate SCG in advance helps to reduce handover latency. Deactivating the candidate SCG and/or delaying initiating random access to the candidate SCG may prevent invalid access when the SCG does not meet the access condition.

The third indication information may include, for example, one or more of the following: an index associated with the candidate SCG; whether to delay initiating random access to the candidate SCG; or whether to deactivate the candidate SCG. In the case where the terminal device cannot simultaneously access the candidate MCG and the candidate SCG, the terminal device transmits the third indication information to the network device corresponding to the fourth cell, enabling the network device and the terminal device to have consistent understanding of the information related to the candidate SCG.

It will be noted that the candidate MCG and the candidate SCG mentioned above may be an MCG and an SCG that the terminal device intends to access, or may be replaced with a target MCG and the target SCG.

In some embodiments, in response to that the measurement result and/or the predicted value of the measurement result of the target SCG meets the access condition, the target SCG may be activated and/or random access may be initiated to the target SCG.

It will be noted that "frequency point/cell" as mentioned in the present disclosure may be replaced with "frequency point and/or cell".

It will be noted that the method provided in the embodiments of the present disclosure may be applied to the conditional handover process, and may also be applied to other types of cell handover processes.

In the embodiments of the present disclosure, the predicted value of the cell measurement result is introduced into the cell handover process, so that the network device may provide more accurate cell configuration and other information to the terminal device, which is conducive to reducing the impact of mobility on system throughput. In addition, the network device may configure certain information for the terminal device to assist with the first report, thereby improving system performance. For example, the network device may configure certain criteria, such as the condition for triggering the first report, to filter the reporting objects, which helps to save reporting overhead. Furthermore, considering that the terminal device is not aware of the deployment of the network device or cell accessibility, the network device may provide the terminal device with the second frequency point/cell associated with the first frequency point/cell, thereby assisting the terminal device in filtering the reported content and saving overhead. Considering the conditional handover with the candidate secondary cell group as an example, in the embodiments of the present disclosure, the network device may obtain whether/when the terminal device can simultaneously access the PCell and/or PSCell, or the probability of accessing different PCell and PSCell pairs, thus providing more appropriate configuration information and improving the probability of successful access.

The method embodiments of the present disclosure are described in detail above with reference to FIGS. 1 to 11. Then, the apparatus embodiments of the present disclosure will be described in detail with reference to FIGS. 12 to 14. It will be understood that the descriptions of the method embodiments and the apparatus embodiments correspond to each other; therefore, as for the parts not described in detail, reference can be made to in the above method embodiments.

FIG. 12 is a schematic diagram of a terminal device in embodiments of the present disclosure. The terminal device shown in FIG. 8 includes: a receiving unit 1210.

The receiving unit 1210 is configured to receive first configuration information transmitted by a network device, the first configuration information being associated with a first report of the terminal device. The first configuration information is used for determining reported content of the first report and/or a condition for triggering the first report.

In some embodiments, the reported content of the first report includes first prediction information, the first prediction information being associated with a predicted value of a cell measurement result.

In some embodiments, the first configuration information includes a frequency point/cell configuration, and the frequency point/cell configuration includes one or more of the following: a first frequency point/cell, or a second frequency point/cell, where the second frequency point/cell is associated with at least a part of the first frequency point/cell.

In some embodiments, the condition for triggering the first report is associated with one or more of the following: a reference signal received power (RSRP) threshold; time information; priority level information of frequency points/cells; or a probability threshold, where the probability threshold is associated with a probability of the first prediction information meeting a preset condition.

In some embodiments, the time information includes a prediction time period for obtaining the first prediction information and/or a time threshold, where the time threshold is associated with time in which the first prediction information meets the preset condition.

In some embodiments, the priority level information of frequency points/cells includes one or more of the following: a priority level of a first frequency point/cell; a priority level of a second frequency point/cell; a third frequency point/cell; or a priority level threshold. The second frequency point/cell is associated with at least a part of the first frequency point/cell, the third frequency point/cell belongs to the first frequency point/cell or the second frequency point/cell, and a priority level of the third frequency point/cell is higher than priority levels of other frequency points/cells in the first frequency point/cell or the second frequency point/cell.

In some embodiments, the condition for triggering the first report includes one or more of the following: the first prediction information meeting the preset condition; the first prediction information meeting the preset condition within a prediction time period; a duration in which the first prediction information meets the preset condition being greater than or equal to a time threshold; a probability of the first prediction information meeting the preset condition being greater than or equal to the probability threshold; a priority level of a frequency point/cell associated with the first prediction information being greater than or equal to a priority level threshold; or the frequency point/cell associated with the first prediction information belonging to a third frequency point/cell.

In some embodiments, the first prediction information includes a predicted value of a measurement result of a first frequency point/cell and/or a predicted value of a measurement result of a second frequency point/cell, and the preset condition includes one or more of the following: a predicted value of an RSRP measurement result of the first frequency point/cell being greater than or equal to a first RSRP threshold; a predicted value of an RSRP measurement result of the second frequency point/cell being greater than or equal to a second RSRP threshold; or a first time period and a second time period overlapping. The second frequency point/cell is associated with at least a part of the first frequency point/cell, the first time period is time in which the predicted value of the RSRP measurement result of the first frequency point/cell is greater than or equal to the first RSRP threshold, and the second time period is time in which the predicted value of the RSRP measurement result of the second frequency point/cell is greater than or equal to the second RSRP threshold.

In some embodiments, the apparatus further includes: a transmitting unit configured to transmit first prediction information to the network device, the first prediction information being determined based on the first configuration information.

In some embodiments, the first prediction information includes one or more of the following: a predicted value of a measurement result of a serving cell of the terminal device; a predicted value of a measurement result of a target frequency point/cell; or a probability of the target frequency point/cell meeting a preset condition. The target frequency point/cell is one or more frequency points/cells in the first frequency point/cell, or the target frequency point/cell includes one or more frequency points/cells in the first frequency point/cell and one or more frequency points/cells in the second frequency point/cell.

In some embodiments, the apparatus further includes: the terminal device receiving second configuration information transmitted by the network device, the second configuration information including configuration information of candidate cells of the terminal device.

In some embodiments, the configuration information of the candidate cells includes configuration information of a candidate master cell group (MCG), and/or configuration information of a candidate secondary cell group (SCG), where the candidate SCG is associated with at least a part of the candidate MCG.

In some embodiments, the second configuration information further includes one or more of the following: first indication information used for indicating the terminal device to delay accessing an SCG in the candidate cells; second indication information used for indicating time information for the terminal device activating and/or accessing the SCG in the candidate cells; or third configuration information used for indicating a candidate cell that retains configuration information, and/or indicating time information for activating and/or accessing the candidate cell that retains the configuration information.

In some embodiments, the second indication information includes one or more of the following: a first timer; or a third threshold associated with a predicted value of a signal quality measurement result of the SCG.

In some embodiments, the apparatus further includes: a determining unit configured to determine whether to access a candidate MCG and a candidate SCG simultaneously based on the first prediction information.

In some embodiments, the apparatus further includes: a performing unit, configured to cause the terminal device to perform a first operation in response to that the terminal device fails to access the candidate MCG and the candidate SCG simultaneously. The first operation includes one or more of the following: applying configurations of the candidate MCG and the candidate SCG; deactivating the candidate SCG; delaying initiating random access to the candidate SCG; or transmitting third indication information to a network device corresponding to a fourth cell. The fourth cell is a cell accessed by the terminal device in the candidate MCG, and the third indication information is used for indicating information related to the candidate SCG.

FIG. 13 is a schematic diagram of a network device in embodiments of the present disclosure. The network device shown in FIG. 13 includes: a first transmitting unit 1310.

The first transmitting unit 1310 is configured to transmit first configuration information to a terminal device, the first configuration information being associated with a first report of the terminal device. The first configuration information is used for determining reported content of the first report and/or a condition for triggering the first report.

In some embodiments, the reported content of the first report includes first prediction information, the first prediction information being associated with a predicted value of a cell measurement result.

In some embodiments, the first configuration information includes a frequency point/cell configuration, and the frequency point/cell configuration includes one or more of the following: a first frequency point/cell, or a second frequency point/cell, where the second frequency point/cell is associated with at least a part of the first frequency point/cell.

In some embodiments, the condition for triggering the first report is associated with one or more of the following: a reference signal received power (RSRP) threshold; time information; priority level information of frequency points/cells; or a probability threshold, where the probability threshold is associated with a probability of the first prediction information meeting a preset condition.

In some embodiments, the time information includes a prediction time period for obtaining the first prediction information and/or a time threshold, where the time threshold is associated with time in which the first prediction information meets the preset condition.

In some embodiments, the priority level information of frequency points/cells includes one or more of the following: a priority level of a first frequency point/cell; a priority level of a second frequency point/cell; a third frequency point/cell; or a priority level threshold. The second frequency point/cell is associated with at least a part of the first frequency point/cell, the third frequency point/cell belongs to the first frequency point/cell or the second frequency point/cell, and a priority level of the third frequency point/cell is higher than priority levels of other frequency points/cells in the first frequency point/cell or the second frequency point/cell.

In some embodiments, the condition for triggering the first report includes one or more of the following: the first prediction information meeting the preset condition; the first prediction information meeting the preset condition within a prediction time period; a duration in which the first prediction information meets the preset condition being greater than or equal to a time threshold; a probability of the first prediction information meeting the preset condition being greater than or equal to the probability threshold; a priority level of a frequency point/cell associated with the first prediction information being greater than or equal to a priority level threshold; or the frequency point/cell associated with the first prediction information belonging to a third frequency point/cell.

In some embodiments, the first prediction information includes a predicted value of a measurement result of a first frequency point/cell and/or a predicted value of a measurement result of a second frequency point/cell, and the preset condition includes one or more of the following: a predicted value of an RSRP measurement result of the first frequency point/cell being greater than or equal to a first RSRP threshold; a predicted value of an RSRP measurement result of the second frequency point/cell being greater than or equal to a second RSRP threshold; or a first time period and a second time period overlapping. The second frequency point/cell is associated with at least a part of the first frequency point/cell, the first time period is time in which the predicted value of the RSRP measurement result of the first frequency point/cell is greater than or equal to the first RSRP threshold, and the second time period is time in which the predicted value of the RSRP measurement result of the second frequency point/cell is greater than or equal to the second RSRP threshold.

In some embodiments, the apparatus further includes: a receiving unit, configured to receive first prediction information transmitted by the terminal device, the first prediction information being determined based on the first configuration information.

In some embodiments, the first prediction information includes one or more of the following: a predicted value of a measurement result of a serving cell of the terminal device; a predicted value of a measurement result of a target frequency point/cell; or a probability of the target frequency point/cell meeting a preset condition. The target frequency point/cell is one or more frequency points/cells in the first frequency point/cell, or the target frequency point/cell includes one or more frequency points/cells in the first frequency point/cell and one or more frequency points/cells in the second frequency point/cell.

In some embodiments, the apparatus further includes: a second transmitting unit, configured to transmit second configuration information to the terminal device, the second configuration information including configuration information of candidate cells of the terminal device.

In some embodiments, the configuration information of the candidate cells includes configuration information of a candidate master cell group (MCG), and/or configuration information of a candidate secondary cell group (SCG), where the candidate SCG is associated with at least a part of the candidate MCG.

In some embodiments, the second configuration information further includes one or more of the following: first indication information used for indicating the terminal device to delay accessing an SCG in the candidate cells; second indication information used for indicating time information for the terminal device activating and/or accessing the SCG in the candidate cells; or third configuration information used for indicating a candidate cell that retains configuration information, and/or indicating time information for activating and/or accessing the candidate cell that retains the configuration information.

In some embodiments, the second indication information includes one or more of the following: a first timer; or a third threshold associated with a predicted value of a signal quality measurement result of the SCG.

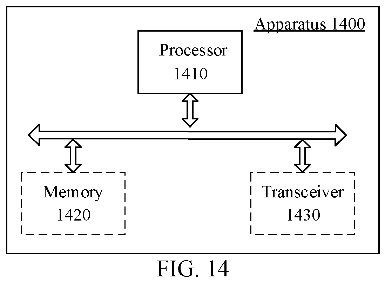

FIG. 14 is a schematic structural diagram of a communication apparatus in embodiments of the present disclosure. The dashed lines in FIG. 14 indicate that units or modules are optional. The apparatus 1400 can be configured to implement the method described in the above method embodiments. The apparatus 1400 may be a chip, a terminal device, or a network device.

The apparatus 1400 may include one or more processors 1410. The processor 1410 can support the apparatus 1400 in implementing the method described in the above method embodiments. The processor 1410 may be a general-purpose processor or a special-purpose processor. For example, the processor may be a central processing unit (CPU). Alternatively, the processor may be another general-purpose processor, a digital signal processor (DSP), an application-specific integrated circuit (ASIC), a field-programmable gate array (FPGA) or another programmable logic device, a discrete gate or transistor logic device, a discrete hardware component, or the like. The general-purpose processor may be a microprocessor, or the processor may be any conventional processor.

The apparatus 1400 may further include one or more memories 1420. The memory 1420 stores a program, and the program is executable by the processor 1410, enabling the processor 1410 to perform the method described in the above method embodiments. The memory 1420 may be independent of the processor 1410 or integrated into the processor 1410.

The apparatus 1400 may further include a transceiver 1430. The processor 1410 can communicate with other device(s) or chip(s) via the transceiver 1430. For example, the processor 1410 may transmit and receive data with other device(s) or chip(s) via the transceiver 1430.

The embodiments of the present disclosure further provide a computer-readable storage medium for storing a program. The computer-readable storage medium can be applied to the terminal or the network device provided in the embodiments of the present disclosure, and the program causes a computer to perform the method performed by the terminal or the network device in each of the embodiments of the present disclosure.

The embodiments of the present disclosure further provide a computer program product. The computer program product includes a program. The computer program product can be applied to the terminal or the network device provided in the embodiments of the present disclosure, and the program causes a computer to perform the method performed by the terminal or the network device in each of the embodiments of the present disclosure.

The embodiments of the present disclosure further provide a computer program. The computer program can be applied to the terminal or the network device provided in the embodiments of the present disclosure, and the computer program causes a computer to perform the method performed by the terminal or the network device in each of the embodiments of the present disclosure.

It will be understood that the meaning of the serving cell (or the current serving cell) mentioned above varies slightly in different scenarios. In a CHO scenario, or in a PCell conditional handover scenario, the serving cell may be a PCell to which the terminal device is currently connected. For example, the serving cell may include a PCell to which the terminal device is connected after the terminal device performs the conditional handover. As another example, the serving cell may include a PCell to which the terminal device is connected before the terminal device performs the conditional handover.

It will also be understood that the terms "system" and "network" may be used interchangeably in the present disclosure. Furthermore, the terms used in the present disclosure are only intended to explain specific embodiments of the present disclosure and are not intended to limit the present disclosure. The terms "first," "second," "third," and "fourth" in the specification, claims, and the accompanying drawings of the present disclosure are used to distinguish between different objects and not to describe a specific order. In addition, the terms "comprise" and "have" and any variations thereof, are intended to cover non-exclusive inclusion.

In the embodiments of the present disclosure, the term "indication" mentioned in the embodiments of the present disclosure may mean a direct indication, or an indirect indication, or may represent an association. For example, A indicates B, which may mean that A directly indicates B (for example, B may be obtained by A) or may mean that A indirectly indicates B (for example, A indicates C, and B may be obtained by C), or may mean that there is an association between A and B.

In the embodiments of the present disclosure, "B corresponding to A" means that B is associated with A, and B can be determined based on A. Moreover, it will also be understood that determining B based on A does not mean that B is determined only based on A; and B may also be determined based on A and/or other information.

In the embodiments of the present disclosure, the term "corresponding" may mean that there is a direct correspondence or indirect correspondence between two, or an association between the two, or may mean a relationship of indicating and being indicated or a relationship of configuring and being configured, etc.

In the embodiments of the present disclosure, "predefined" or "preconfigured" may be implemented by pre-saving corresponding codes, tables, or other means that can be used to indicate relevant information in device(s) (e.g., including a terminal device and a network device). The present disclosure does not limit the specific implementation thereof. For example, "predefined" may refer to being defined in a protocol.

In the embodiments of the present disclosure, the "protocol" may refer to a standard protocol in the communication field, including, for example, an LTE protocol, an NR protocol, and related protocols applied in future communication systems, which will not be limited in the present disclosure.

In the embodiments of the present disclosure, the term "and/or" is only an association relationship to describe associated objects, which means that there may be three kinds of relationships. For example, A and/or B may represent three cases that: A exists alone, both A and B exist, and B exists alone. In addition, a character "/" herein generally means that related objects before and after "/" are in an "or" relationship.

In all of the embodiments of the present disclosure, the magnitude of a serial number of each of the above processes does not imply a sequential order of execution, and that the order of execution of the processes should be determined by their function and inherent logic without constituting any limitation of the process of implementing the embodiments of the present disclosure.

In several embodiments provided in the present disclosure, it should be understood that the disclosed systems, devices, and methods can be implemented in other ways. For example, the device embodiments described above are merely illustrative. For example, the division of the units is merely a logical function division. In actual implementation, there may be other division methods, such as multiple units or components may be combined or integrated into another system, or some features may be ignored or not executed. In addition, the mutual coupling or direct coupling or communication connection shown or discussed may be an indirect coupling or communication connection through some interface, device or unit, which may be electrical, mechanical or other forms.

The units described as separate components may or may not be physically separated, and the components shown as units may or may not be physical units, that is, they may be located in one place or distributed over multiple network units. Some or all of the units may be selected according to actual needs to achieve the purpose of the solution in this embodiment.

In addition, each functional unit in each embodiment of the present disclosure may be integrated into one processing unit, or each unit may exist physically separately, or two or more units may be integrated into one unit.

All or part of the above embodiments may be implemented through software, hardware, firmware, or any combination thereof. When implemented using software, all or part of the above embodiments may be implemented in a form of a computer program product. The computer program product includes one or more computer instructions. When loaded and executed on a computer, the computer program instructions produce, in all or in part, a process or function in accordance with the embodiments of the present application. The computer may be a general-purpose computer, a special-purpose computer, a computer network, or any of other programmable apparatuses. The computer instructions may be stored in a computer-readable storage medium, or transmitted from one computer-readable storage medium to another computer-readable storage medium. For example, the computer instructions may be transmitted from a website, a computer, a server, or a data center to another website, computer, server, or data center through wired manner (e.g., coaxial cable, optical fiber, or digital subscriber line (DSL)) or wireless (e.g., infrared, radio, or microwave) manner. The computer-readable storage medium may be any available medium to which a computer can access or may be a data storage device, such as a server or a data center that includes one or more available media. The available medium may be a magnetic medium (e.g., a floppy disk, a hard disk, or a magnetic tape), an optical medium (e.g., a digital video disc (DVD)), or a semiconductor medium (e.g., a solid state disk (SSD)).

The foregoing descriptions are merely specific implementations of the present disclosure, but the protection scope of the present disclosure is not limited thereto. Any skilled person in the art could readily conceive of variations or replacements within the technical scope disclosed in the present disclosure, which shall be all included in the protection scope of the present disclosure. Therefore, the protection scope of the present disclosure shall be subject to the protection scope of the claims.

## Claims

1. A wireless communication method, comprising:
receiving, by a terminal device, first configuration information transmitted by a network device, the first configuration information being associated with a first report of the terminal device, wherein the first configuration information is used for determining reported content of the first report and/or a condition for triggering the first report.

2. The method according to claim 1, wherein the reported content of the first report comprises first prediction information, the first prediction information being associated with a predicted value of a cell measurement result.

3. The method according to claim 2, wherein the first configuration information comprises a frequency point/cell configuration, and the frequency point/cell configuration comprises one or more of following:
a first frequency point/cell; or
a second frequency point/cell;
wherein the second frequency point/cell is associated with at least a part of the first frequency point/cell.

4. The method according to claim 2 or 3, wherein the condition for triggering the first report is associated with one or more of following:
a reference signal received power (RSRP) threshold;
time information;
priority level information of frequency points/cells; or
a probability threshold;
wherein the probability threshold is associated with a probability of the first prediction information meeting a preset condition.

5. The method according to claim 4, wherein the time information comprises a prediction time period for obtaining the first prediction information and/or a time threshold, wherein the time threshold is associated with time in which the first prediction information meets the preset condition.

6. The method according to claim 4 or 5, wherein the priority level information of frequency points/cells comprises one or more of following:
a priority level of a first frequency point/cell;
a priority level of a second frequency point/cell;
a third frequency point/cell; or
a priority level threshold;
wherein the second frequency point/cell is associated with at least a part of the first frequency point/cell, the third frequency point/cell belongs to the first frequency point/cell or the second frequency point/cell, and a priority level of the third frequency point/cell is higher than priority levels of other frequency points/cells in the first frequency point/cell or the second frequency point/cell.

7. The method according to any one of claims 4 to 6, wherein the condition for triggering the first report comprises one or more of following:
the first prediction information meeting the preset condition;
the first prediction information meeting the preset condition within a prediction time period;
a duration in which the first prediction information meets the preset condition being greater than or equal to a time threshold;
a probability of the first prediction information meeting the preset condition being greater than or equal to the probability threshold;
a priority level of a frequency point/cell associated with the first prediction information being greater than or equal to a priority level threshold; or
the frequency point/cell associated with the first prediction information belonging to a third frequency point/cell.

8. The method according to claim 7, wherein the first prediction information comprises a predicted value of a measurement result of a first frequency point/cell and/or a predicted value of a measurement result of a second frequency point/cell, and the preset condition comprises one or more of following:
a predicted value of an RSRP measurement result of the first frequency point/cell being greater than or equal to a first RSRP threshold;
a predicted value of an RSRP measurement result of the second frequency point/cell being greater than or equal to a second RSRP threshold; or
a first time period and a second time period overlapping;
wherein the second frequency point/cell is associated with at least a part of the first frequency point/cell, the first time period is time in which the predicted value of the RSRP measurement result of the first frequency point/cell is greater than or equal to the first RSRP threshold, and the second time period is time in which the predicted value of the RSRP measurement result of the second frequency point/cell is greater than or equal to the second RSRP threshold.

9. The method according to any one of claims 1 to 8, wherein the method further comprises:
transmitting, by the terminal device, first prediction information to the network device, the first prediction information being determined based on the first configuration information.

10. The method according to claim 9, wherein the first prediction information comprises one or more of following:
a predicted value of a measurement result of a serving cell of the terminal device;
a predicted value of a measurement result of a target frequency point/cell; or
a probability of the target frequency point/cell meeting a preset condition;
wherein the target frequency point/cell is one or more frequency points/cells in the first frequency point/cell, or the target frequency point/cell comprises one or more frequency points/cells in the first frequency point/cell and one or more frequency points/cells in the second frequency point/cell.

11. The method according to claim 9 or 10, wherein the method further comprises:
receiving, by the terminal device, second configuration information transmitted by the network device, the second configuration information comprising configuration information of candidate cells of the terminal device.

12. The method according to claim 11, wherein the configuration information of the candidate cells comprises configuration information of a candidate master cell group (MCG), and/or configuration information of a candidate secondary cell group (SCG), wherein the candidate SCG is associated with at least a part of the candidate MCG.

13. The method according to claim 11 or 12, wherein the second configuration information further comprises one or more of following:
first indication information used for indicating the terminal device to delay accessing an SCG in the candidate cells;
second indication information used for indicating time information for the terminal device activating and/or accessing the SCG in the candidate cells; or
third configuration information used for indicating a candidate cell that retains configuration information, and/or indicating time information for activating and/or accessing the candidate cell that retains the configuration information.

14. The method according to claim 13, wherein the second indication information comprises one or more of following:
a first timer; or
a third threshold associated with a predicted value of a signal quality measurement result of the SCG.

15. The method according to claim 11 or 12, wherein the method further comprises:
determining, by the terminal device, whether to access a candidate MCG and a candidate SCG simultaneously based on the first prediction information.

16. The method according to claim 15, wherein the method further comprises:
in response to that the terminal device fails to access the candidate MCG and the candidate SCG simultaneously, performing, by the terminal device, a first operation, wherein the first operation comprises one or more of following:
applying configurations of the candidate MCG and the candidate SCG;
deactivating the candidate SCG;
delaying initiating random access to the candidate SCG; or
transmitting third indication information to a network device corresponding to a fourth cell;
wherein the fourth cell is a cell accessed by the terminal device in the candidate MCG, and the third indication information is used for indicating information related to the candidate SCG.

17. A wireless communication method, comprising:
transmitting, by a network device, first configuration information to a terminal device, the first configuration information being associated with a first report of the terminal device, wherein the first configuration information is used for determining reported content of the first report and/or a condition for triggering the first report.

18. The method according to claim 17, wherein the reported content of the first report comprises first prediction information, the first prediction information being associated with a predicted value of a cell measurement result.

19. The method according to claim 18, wherein the first configuration information comprises a frequency point/cell configuration, and the frequency point/cell configuration comprises one or more of following:
a first frequency point/cell; or
a second frequency point/cell;
wherein the second frequency point/cell is associated with at least a part of the first frequency point/cell.

20. The method according to claim 18 or 19, wherein the condition for triggering the first report is associated with one or more of following:
a reference signal received power (RSRP) threshold;
time information;
priority level information of frequency points/cells; or
a probability threshold;
wherein the probability threshold is associated with a probability of the first prediction information meeting a preset condition.

21. The method according to claim 20, wherein the time information comprises a prediction time period for obtaining the first prediction information and/or a time threshold, wherein the time threshold is associated with time in which the first prediction information meets the preset condition.

22. The method according to claim 20 or 21, wherein the priority level information of frequency points/cells comprises one or more of following:
a priority level of a first frequency point/cell;
a priority level of a second frequency point/cell;
a third frequency point/cell; or
a priority level threshold;
wherein the second frequency point/cell is associated with at least a part of the first frequency point/cell, the third frequency point/cell belongs to the first frequency point/cell or the second frequency point/cell, and a priority level of the third frequency point/cell is higher than priority levels of other frequency points/cells in the first frequency point/cell or the second frequency point/cell.

23. The method according to any one of claims 20 to 22, wherein the condition for triggering the first report comprises one or more of following:
the first prediction information meeting the preset condition;
the first prediction information meeting the preset condition within a prediction time period;
a duration in which the first prediction information meets the preset condition being greater than or equal to a time threshold;
a probability of the first prediction information meeting the preset condition being greater than or equal to the probability threshold;
a priority level of a frequency point/cell associated with the first prediction information being greater than or equal to a priority level threshold; or
the frequency point/cell associated with the first prediction information belonging to a third frequency point/cell.

24. The method according to claim 23, wherein the first prediction information comprises a predicted value of a measurement result of a first frequency point/cell and/or a predicted value of a measurement result of a second frequency point/cell, and the preset condition comprises one or more of following:
a predicted value of an RSRP measurement result of the first frequency point/cell being greater than or equal to a first RSRP threshold;
a predicted value of an RSRP measurement result of the second frequency point/cell being greater than or equal to a second RSRP threshold; or
a first time period and a second time period overlapping;
wherein the second frequency point/cell is associated with at least a part of the first frequency point/cell, the first time period is time in which the predicted value of the RSRP measurement result of the first frequency point/cell is greater than or equal to the first RSRP threshold, and the second time period is time in which the predicted value of the RSRP measurement result of the second frequency point/cell is greater than or equal to the second RSRP threshold.

25. The method according to any one of claims 17 to 24, wherein the method further comprises:
receiving, by the network device, first prediction information transmitted by the terminal device, the first prediction information being determined based on the first configuration information.

26. The method according to claim 25, wherein the first prediction information comprises one or more of following:
a predicted value of a measurement result of a serving cell of the terminal device;
a predicted value of a measurement result of a target frequency point/cell; or
a probability of the target frequency point/cell meeting a preset condition;
wherein the target frequency point/cell is one or more frequency points/cells in the first frequency point/cell, or the target frequency point/cell comprises one or more frequency points/cells in the first frequency point/cell and one or more frequency points/cells in the second frequency point/cell.

27. The method according to claim 25 or 26, wherein the method further comprises:
transmitting, by the network device, second configuration information to the terminal device, the second configuration information comprising configuration information of candidate cells of the terminal device.

28. The method according to claim 27, wherein the configuration information of the candidate cells comprises configuration information of a candidate master cell group (MCG), and/or configuration information of a candidate secondary cell group (SCG), wherein the candidate SCG is associated with at least a part of the candidate MCG.

29. The method according to claim 27 or 28, wherein the second configuration information further comprises one or more of following:
first indication information used for indicating the terminal device to delay accessing an SCG in the candidate cells;
second indication information used for indicating time information for the terminal device activating and/or accessing the SCG in the candidate cells; or
third configuration information used for indicating a candidate cell that retains configuration information, and/or indicating time information for activating and/or accessing the candidate cell that retains the configuration information.

30. The method according to claim 29, wherein the second indication information comprises one or more of following:
a first timer; or
a third threshold associated with a predicted value of a signal quality measurement result of the SCG.

31. A terminal device, comprising:
a receiving unit configured to receive first configuration information transmitted by a network device, the first configuration information being associated with a first report of the terminal device, wherein the first configuration information is used for determining reported content of the first report and/or a condition for triggering the first report.

32. The device according to claim 31, wherein the reported content of the first report comprises first prediction information, the first prediction information being associated with a predicted value of a cell measurement result.

33. The device according to claim 32, wherein the first configuration information comprises a frequency point/cell configuration, and the frequency point/cell configuration comprises one or more of following:
a first frequency point/cell; or
a second frequency point/cell;
wherein the second frequency point/cell is associated with at least a part of the first frequency point/cell.

34. The device according to claim 32 or 33, wherein the condition for triggering the first report is associated with one or more of following:
a reference signal received power (RSRP) threshold;
time information;
priority level information of frequency points/cells; or
a probability threshold;
wherein the probability threshold is associated with a probability of the first prediction information meeting a preset condition.

35. The device according to claim 34, wherein the time information comprises a prediction time period for obtaining the first prediction information and/or a time threshold, wherein the time threshold is associated with time in which the first prediction information meets the preset condition.

36. The device according to claim 34 or 35, wherein the priority level information of frequency points/cells comprises one or more of following:
a priority level of a first frequency point/cell;
a priority level of a second frequency point/cell;
a third frequency point/cell; or
a priority level threshold;
wherein the second frequency point/cell is associated with at least a part of the first frequency point/cell, the third frequency point/cell belongs to the first frequency point/cell or the second frequency point/cell, and a priority level of the third frequency point/cell is higher than priority levels of other frequency points/cells in the first frequency point/cell or the second frequency point/cell.

37. The device according to any one of claims 34 to 36, wherein the condition for triggering the first report comprises one or more of following:
the first prediction information meeting the preset condition;
the first prediction information meeting the preset condition within a prediction time period;
a duration in which the first prediction information meets the preset condition being greater than or equal to a time threshold;
a probability of the first prediction information meeting the preset condition being greater than or equal to the probability threshold;
a priority level of a frequency point/cell associated with the first prediction information being greater than or equal to a priority level threshold; or
the frequency point/cell associated with the first prediction information belonging to a third frequency point/cell.

38. The device according to claim 37, wherein the first prediction information comprises a predicted value of a measurement result of a first frequency point/cell and/or a predicted value of a measurement result of a second frequency point/cell, and the preset condition comprises one or more of following:
a predicted value of an RSRP measurement result of the first frequency point/cell being greater than or equal to a first RSRP threshold;
a predicted value of an RSRP measurement result of the second frequency point/cell being greater than or equal to a second RSRP threshold; or
a first time period and a second time period overlapping;
wherein the second frequency point/cell is associated with at least a part of the first frequency point/cell, the first time period is time in which the predicted value of the RSRP measurement result of the first frequency point/cell is greater than or equal to the first RSRP threshold, and the second time period is time in which the predicted value of the RSRP measurement result of the second frequency point/cell is greater than or equal to the second RSRP threshold.

39. The device according to any one of claims 31 to 38, wherein the device further comprises:
a transmitting unit, configured to transmit first prediction information to the network device, the first prediction information being determined based on the first configuration information.

40. The device according to claim 39, wherein the first prediction information comprises one or more of following:
a predicted value of a measurement result of a serving cell of the terminal device;
a predicted value of a measurement result of a target frequency point/cell; or
a probability of the target frequency point/cell meeting a preset condition;
wherein the target frequency point/cell is one or more frequency points/cells in the first frequency point/cell, or the target frequency point/cell comprises one or more frequency points/cells in the first frequency point/cell and one or more frequency points/cells in the second frequency point/cell.

41. The device according to claim 39 or 40, wherein the device further comprises:
the terminal device receiving second configuration information transmitted by the network device, the second configuration information comprising configuration information of candidate cells of the terminal device.

42. The device according to claim 41, wherein the configuration information of the candidate cells comprises configuration information of a candidate master cell group (MCG), and/or configuration information of a candidate secondary cell group (SCG), wherein the candidate SCG is associated with at least a part of the candidate MCG.

43. The device according to claim 41 or 42, wherein the second configuration information further comprises one or more of following:
first indication information used for indicating the terminal device to delay accessing an SCG in the candidate cells;
second indication information used for indicating time information for the terminal device activating and/or accessing the SCG in the candidate cells; or
third configuration information used for indicating a candidate cell that retains configuration information, and/or indicating time information for activating and/or accessing the candidate cell that retains the configuration information.

44. The device according to claim 43, wherein the second indication information comprises one or more of following:
a first timer; or
a third threshold associated with a predicted value of a signal quality measurement result of the SCG.

45. The device according to claim 41 or 42, wherein the device further comprises:
a determining unit, configured to determine whether to access a candidate MCG and a candidate SCG simultaneously based on the first prediction information.

46. The device according to claim 45, wherein the device further comprises:
a performing unit, configured to cause the terminal device to perform a first operation in response to that the terminal device fails to access the candidate MCG and the candidate SCG simultaneously, wherein the first operation comprises one or more of following:
applying configurations of the candidate MCG and the candidate SCG;
deactivating the candidate SCG;
delaying initiating random access to the candidate SCG; or
transmitting third indication information to a network device corresponding to a fourth cell;
wherein the fourth cell is a cell accessed by the terminal device in the candidate MCG, and the third indication information is used for indicating information related to the candidate SCG.

47. A network device, comprising:
a first transmitting unit, configured to transmit first configuration information to a terminal device, the first configuration information being associated with a first report of the terminal device, wherein the first configuration information is used for determining reported content of the first report and/or a condition for triggering the first report.

48. The device according to claim 47, wherein the reported content of the first report comprises first prediction information, the first prediction information being associated with a predicted value of a cell measurement result.

49. The device according to claim 48, wherein the first configuration information comprises a frequency point/cell configuration, and the frequency point/cell configuration comprises one or more of following:
a first frequency point/cell; or
a second frequency point/cell;
wherein the second frequency point/cell is associated with at least a part of the first frequency point/cell.

50. The device according to claim 48 or 49, wherein the condition for triggering the first report is associated with one or more of following:
a reference signal received power (RSRP) threshold;
time information;
priority level information of frequency points/cells; or
a probability threshold;
wherein the probability threshold is associated with a probability of the first prediction information meeting a preset condition.

51. The device according to claim 50, wherein the time information comprises a prediction time period for obtaining the first prediction information and/or a time threshold, wherein the time threshold is associated with time in which the first prediction information meets the preset condition.

52. The device according to claim 50 or 51, wherein the priority level information of frequency points/cells comprises one or more of following:
a priority level of a first frequency point/cell;
a priority level of a second frequency point/cell;
a third frequency point/cell; or
a priority level threshold;
wherein the second frequency point/cell is associated with at least a part of the first frequency point/cell, the third frequency point/cell belongs to the first frequency point/cell or the second frequency point/cell, and a priority level of the third frequency point/cell is higher than priority levels of other frequency points/cells in the first frequency point/cell or the second frequency point/cell.

53. The device according to any one of claims 50 to 52, wherein the condition for triggering the first report comprises one or more of following:
the first prediction information meeting the preset condition;
the first prediction information meeting the preset condition within a prediction time period;
a duration in which the first prediction information meets the preset condition being greater than or equal to a time threshold;
a probability of the first prediction information meeting the preset condition being greater than or equal to the probability threshold;
a priority level of a frequency point/cell associated with the first prediction information being greater than or equal to a priority level threshold; or
the frequency point/cell associated with the first prediction information belonging to a third frequency point/cell.

54. The device according to claim 53, wherein the first prediction information comprises a predicted value of a measurement result of a first frequency point/cell and/or a predicted value of a measurement result of a second frequency point/cell, and the preset condition comprises one or more of following:
a predicted value of an RSRP measurement result of the first frequency point/cell being greater than or equal to a first RSRP threshold;
a predicted value of an RSRP measurement result of the second frequency point/cell being greater than or equal to a second RSRP threshold; or
a first time period and a second time period overlapping;
wherein the second frequency point/cell is associated with at least a part of the first frequency point/cell, the first time period is time in which the predicted value of the RSRP measurement result of the first frequency point/cell is greater than or equal to the first RSRP threshold, and the second time period is time in which the predicted value of the RSRP measurement result of the second frequency point/cell is greater than or equal to the second RSRP threshold.

55. The device according to any one of claims 47 to 54, wherein the device further comprises:
a receiving unit, configured to receive first prediction information transmitted by the terminal device, the first prediction information being determined based on the first configuration information.

56. The device according to claim 55, wherein the first prediction information comprises one or more of following:
a predicted value of a measurement result of a serving cell of the terminal device;
a predicted value of a measurement result of a target frequency point/cell; or
a probability of the target frequency point/cell meeting a preset condition;
wherein the target frequency point/cell is one or more frequency points/cells in the first frequency point/cell, or the target frequency point/cell comprises one or more frequency points/cells in the first frequency point/cell and one or more frequency points/cells in the second frequency point/cell.

57. The device according to claim 55 or 56, wherein the device further comprises:
a second transmitting unit, configured to transmit second configuration information to the terminal device, the second configuration information comprising configuration information of candidate cells of the terminal device.

58. The device according to claim 57, wherein the configuration information of the candidate cells comprises configuration information of a candidate master cell group (MCG), and/or configuration information of a candidate secondary cell group (SCG), wherein the candidate SCG is associated with at least a part of the candidate MCG.

59. The device according to claim 57 or 58, wherein the second configuration information further comprises one or more of following:
first indication information used for indicating the terminal device to delay accessing an SCG in the candidate cells;
second indication information used for indicating time information for the terminal device activating and/or accessing the SCG in the candidate cells; or
third configuration information used for indicating a candidate cell that retains configuration information, and/or indicating time information for activating and/or accessing the candidate cell that retains the configuration information.

60. The device according to claim 59, wherein the second indication information comprises one or more of following:
a first timer; or
a third threshold associated with a predicted value of a signal quality measurement result of the SCG.

61. A terminal device, comprising a memory and a processor, wherein the memory is configured to store a program, and the processor is configured to call the program in the memory to perform the method according to any one of claims 1 to 16.

62. A network device, comprising a memory and a processor, wherein the memory is configured to store a program, and the processor is configured to call the program in the memory to perform the method according to any one of claims 17 to 30.

63. An apparatus, comprising a processor configured to call a program from a memory to perform the method according to any one of claims 1 to 16 or the method according to any one of claims 17 to 30.

64. A chip, comprising a processor configured to call a program from a memory, causing a device equipped with the chip to perform the method according to any one of claims 1 to 16 or the method according to any one of claims 17 to 30.

65. A computer-readable storage medium, having a program stored thereon, wherein the program causes a computer to perform the method according to any one of claims 1 to 16 or the method according to any one of claims 17 to 30.

66. A computer program product, comprising a program, wherein the program causes a computer to perform the method according to any one of claims 1 to 16 or the method according to any one of claims 17 to 30.

67. A computer program, wherein the computer program causes a computer to perform the method according to any one of claims 1 to 16 or the method according to any one of claims 17 to 30.
